# EUROPÄISCHE PATENTANMELDUNG

(11) **EP 3 772 165 A1**
(43) Veröffentlichungstag der Anmeldung: **03.02.2021**
(21) Anmeldenummer: 20165529.7
(22) Anmeldetag: 25.03.2020
(51) Int. Cl.: H02M 1/12

(54) **SCHALTUNG UND VERFAHREN ZUR REDUKTION NETZSEITIGER OBERWELLEN IM EINGANGSSTROM EINES DIODENGLEICHRICHTERS**

(30) Priorität: 31.07.2019 DE 102019120682
(71) Anmelder: ebm-papst Mulfingen GmbH & Co. KG, 74673 Mulfingen (DE)
(72) Erfinder: SCHROTH, Sebastian, 74635 Kupferzell (DE); SCHNEIDER, Alex, 74653 Künzelsau (DE)
(74) Vertreter: Staeger & Sperling Partnerschaftsgesellschaft mbB

(57) **Zusammenfassung**

Die Erfindung betrifft ein Verfahren und eine Schaltungsanordnung (1) zur Reduktion der Oberwellen des Eingangsstroms eines an einem Wechselstromnetz (N) angeschlossenen Gleichrichters (10) zur Bereitstellung einer Gleichspannung für einen, einen Speicherkondensator (C_{ZK}) aufweisenden Gleichspannungsverbraucher (40), umfassend einen dem Gleichrichter (10) nachgeschalteten Gleichspannungssteller (20) sowie eine Regelungseinrichtung (30), die konfiguriert ist, dem Gleichspannungssteller (20) einen spezifischen Strom aufzuprägen, insbesondere einen in der Form annäherndem DC-Strom ein Oberschwingungsstromsignal aufzuprägen, so dass der Oberwellenanteil in dem Eingangsstrom reduziert wird.

## Beschreibung

Die vorliegende Erfindung betrifft eine Schaltungsanordnung und ein Verfahren zur Reduzierung der Oberwellen im Eingangsstrom eines Diodengleichrichters.

Bei einem Schaltnetzteil bzw. einer Eingangsstufe für eine Aufbereitung einer gleichgerichteten Zwischenkreisspannung für z. B. einen Motor wird typischerweise ein Pulsweitenmodulations-Konvertierungsverfahren oder ein Gleichrichtungsverfahren als ein Verfahren für die AC/DC-Gleichrichtung zum Umwandeln eines Wechselstroms in einen Gleichstrom eingesetzt. Das Pulsweitenmodulations-Gleichrichtungsverfahren ist ein Verfahren, das den Eingangsstrom so nahe wie möglich an eine sinusförmige Wellenform durch Anwendung des Pulsweitenmodulations-Gleichrichtungsverfahrens (pulse width modulation method) unter Verwendung von Leistungsschaltelementen heran bringt. Während das Pulsweitenmodulations-Konvertierungsverfahren die Vorteile hat, dass es in der Lage ist, die Oberwellen des Eingangsstroms zu verringern und ferner die Ausgangs Gleichspannung veränderlich zu machen.

Auf der anderen Seite ist das Gleichrichtungsverfahren ein Verfahren das umfangreich eingesetzt wird und das die Gleichrichtung durch Hindurchleiten des Eingangswechselstroms aus der Stromquelle durch eine Brückenschaltung aus Dioden bewirkt. Obgleich dieses Verfahren im Gegensatz zum Pulsweitenmodulations-Konvertierungsverfahren Beschränkungen aufweist, wie zum Beispiel, dass wenn der Eingang einen großen Anteil von Oberwellen hat und wenn die Ausgangsgleichspannung durch den Spitzenwert des Eingangswechselstroms bestimmt wird, der Temperaturanstieg der Leistungsschaltelemente geringer als bei dem Pulsweitenmodulations-Konvertierungsverfahren ist, weil bei dem Gleichrichtungsverfahren kein Schalten erfolgt.

Ein großer Nachteil des Gleichrichtungsverfahren ist das Problem, dass dieses einen hohen Anteil von unerwünschten Oberwellen erzeugt, die dann in dem Eingangsstrom enthalten sind.

Die DE 10 2008 055875 A1 beschäftigt sich mit dem Problem von Oberwellen eines Servomotors. Diese Druckschrift betrifft einen Servomotor, wobei ein Steuergerät in Abhängigkeit von einem Betriebswunsch ein Motor-Eingangssignal (S) ausgibt, wobei Mittel vorgesehen sind, welche Änderungen der Motorwirkung infolge des Motorbetriebes entgegenwirken, wobei in dem Steuergerät ein mindestens die Oberwellen des Servomotors in Abhängigkeit von Parametern des Servomotors beschreibendes Oberwellenmodell vorgesehen ist, wobei von dem Oberwellenmodell in Abhängigkeit von Parametern des Servomotors ein Korrektursignal ausgegeben wird, das auf das Motor-Eingangssignal aufgeschaltet wird, wobei das Korrektursignal den Oberwellen des Servomotors entgegenwirkt.

Aus der DE 10 2011 016931 A1 ist eine Motoransteueranordnung für den Betrieb eines Motors vorgestellt, der die Umwandlung eines Wechselstroms in einen Gleichstrom und der eine Unterdrückung von Oberwellen im Eingangsstrom während des normalen Antriebsmodus des Motors ausführt. Die Druckschrift beschreibt weiter die Motoransteueranordnung, die einen Motor durch Stromzufuhr aus einer Wechselstromquelle betreibt, umfassend einen AC/DC-Konverter, der in einem Konverterbetriebsmodus arbeitet, welcher zwischen einem Pulsweitenmodulations-Konverterbetriebsmodus, bei dem eine Eingangswechselspannung in eine Gleichspannung mit Hilfe einer Pulsweitenmodulationsregelung, die auf eine Vielzahl von seriell und parallel miteinander verbundenen Leistungsschaltelementen einwirkt, umgewandelt wird, und einem Gleichrichtungsbetriebsmodus, bei dem eine Eingangswechselspannung in eine Gleichspannung unter Verwendung einer Vielzahl von antiparallel mit mehreren zugeordneten Leistungsschaltelementen verbundenen Dioden umgewandelt wird, umgeschaltet wird, und eine Konvertersteuereinheit, die den Konverterbetriebsmodus des AC/DC-Konverters entsprechend einer Last während des normalen Antriebsmodus des Motors dynamisch umschaltet. Eine solche Anordnung ist technisch aufwändig und benötigt sowohl die Schaltelemente zum PWM-Verfahren als auch die Halbbrücke für den Gleichrichtungsbetriebsmodus.

Wünschenswert sind daher eine technisch einfache und effiziente Lösung sowie ein entsprechendes Verfahren zum Reduzieren der Oberwellen, die im Eingangsstrom enthalten sind. Der vorliegenden Erfindung liegt daher die Aufgabe zu Grunde, vorbesagte Nachteile im Stand der Technik zu überwinden und eine einfach und kostengünstig realisierbare Lösung zum Betrieb eines Gleichrichters, insbesondere eines 3-Phasen Gleichrichters vorzuschlagen und dabei insbesondere die folgenden Vorteile einzeln oder kumuliert zu erzielen:
- Geringere Oberwellengehalte (in den überwiegenden Oberwellen),
- Reduktion des Filtervolumens,
- Kostenvorteil in der Komponentenauswahl des EMV-Filters,
- Erreichen der Normkonformität (Einhalten der max. Amplitudenhöhe der Oberwellen), wobei es wichtig ist, mit den Oberwellen insbesondere die einschlägigen Normen der Reihe DIN EN 61000, weiter insbesondere je nach Geltungsbereich die DIN EN 61000-3-12 für Ströme größer 16A, einzuhalten, die einen absoluten Pegel vorschreiben,
- Verbesserung des Leistungsfaktors mit der Folge der möglichen Reduktion von erforderlichen Leiterquerschnitten,
- Das Erzielen einer gegenüber insbesondere alternativen klassischen PFC-Schaltung kostengünstigere Lösung,
- Platzersparnis, insbesondere durch das Einsparen von zusätzlichen Filterkomponenten und elektronischen Bauteilen.

Diese Aufgabe wird durch die Merkmalskombination gemäß Anspruch 1 gelöst.

Erfindungsgemäß ist hierzu eine Schaltungsanordnung zur Reduktion der Oberwellen des Eingangsstroms eines an einem Wechselstromnetz angeschlossenen Gleichrichters zur Bereitstellung einer Gleichspannung für einen, einen Speicherkondensator (vorzugsweise einen Zwischenkreiskondensator) aufweisenden Gleichspannungsverbraucher, umfassend einen dem Gleichrichter nachgeschalteten Gleichspannungssteller sowie eine Regelungseinrichtung, die konfiguriert ist, dem Gleichspannungssteller einen spezifischen Strom aufzuprägen, insbesondere dem DC-Strom ein oder mehrere Oberschwingungsstromsignale aufzuprägen, so dass der Oberwellenanteil in dem Eingangsstrom reduziert wird.

Ein Grundgedanke der Erfindung sieht demnach das Aufaddieren einer (Ober)-Schwingung auf den DC-Phasenstrom vor, indem durch das gezielte Aufprägen einer oder mehreren zum Netz synchronen Oberschwingung (=Sinus-Schwingung) auf einen Gleichstrom des Gleichspannungssteller. Die Erfindung kann in einer vorteilhaften Ausprägung dabei zusätzlich eine oder mehrere der folgenden Optionen aufweisen
- Die Einprägung der Oberschwingung erfolgt abhängig von der schwankenden aufgenommenen elektrischen Leistung (Oberschwingungsamplitude ist dann nicht konstant), so dass das Aufprägen des Stromes mit einer nicht konstanten Amplitude gezielt leistungsabhängig erfolgt;
- Die Einprägung der Oberschwingung erfolgt relativ zu einem vorgegebenen Sollwert;
- Die Verwendung der 5, 11, 17, ... Oberwellen zur Aufnahme von Energie aus dem Netz bei gleichzeitiger Reduktion der anderen Harmonischen, wodurch das Aufprägen des Stromes mit jeweils der 5-ten, 11-ten, 17-ten, ..., 5 + n.6-ten Oberwelle der im Eingangssignal enthaltenen Oberwellen erfolgt;
- Die Erzeugung des aufgeprägten Signals aus der Netzspannung, wobei das Stromsignal zum Aufprägen des Stromes auf den Strom des Gleichspannungsstellers dann unmittelbar aus dem netzseitigen Eingangssignal erzeugt wird;
- Die Erzeugung des aufgeprägten Signals aus dem Zwischenkreis, wobei der oben genannte Speicherkondensator ein Zwischenkreiskondensator ist und das Stromsignal zum Aufprägen des Stromes auf den DC-Strom des Gleichspannungsstellers aus einem diesen Zwischenkreiskondensator enthaltenen Zwischenkreis (des angeschlossenen Verbrauchers) erzeugt wird.

Bevorzugt ist die Schaltungsanordnung weiter so ausgebildet, dass der Gleichspannungssteller ein DC/DC-Wandler ist, vorzugsweise ein Hochsetzsteller, Tiefsetzsteller, ein CuK-Wandler oder ein anderer geeigneter DC/DC-Wandler.

Es ist weiter in einer vorteilhaften Ausgestaltung der Erfindung vorgesehen, dass der Gleichspannungssteller aus einer Parallelschaltung und/oder Serienschaltung mehrerer DC/DC-Steller gebildet ist, je nachdem ob man die Schaltungsanordung im Interleaving-Modus oder bei der Serienschaltung im Multilevel-Modus betreiben will.

Ein weiterer Aspekt der vorliegenden Erfindung betrifft auch das Verfahren zur Reduktion der Oberwellen des Eingangsstroms eines an einem Wechselspannungsnetz angeschlossenen Gleichspannungsverbraucher mittels einer wie zuvor beschriebenen Schaltungsanordnung, wobei der aufgeprägte Strom eine Stromform mit den folgenden kumulierten Anteilen aufweist:
a) einem konstanten Anteil I Konstant und dazu addiert einem Betrag |sin|, der periodisch mit der 6-fachen Netzfrequenz mit f=□/(2·π), insbesondere gemäß der Funktion α-î-|sin(6ωt)| ist
   oder
b) einem periodischen Anteil α-î-sin(6ωt) addiert auf ein Offsetwert, vorzugsweise α·î,
   wobei α·eine skalierbare Konstante und î·der Scheitelwert des Eingangsstroms.

In einer bevorzugten Ausgestaltung dieses Verfahrens ist vorgesehen, dass die Erzeugung des Stromsignals aus der Netzspannung oder aus einer über eine PLL im Mikroprozessor (µC) der Regelungseinrichtung synchronisierten Sinusschwingung oder aus einem gewonnenen Signal aus der Zwischenkreisspannung oder aus der Spannung an einem Abgriff nach dem Gleichrichter erfolgt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigt:
- Fig. 1: eine Ansicht eines Ausführungsbeispiels einer Schaltungstopologie zur Reduktion der Oberwellen des netzseitigen Eingangsstroms,
- Fig. 2: zeigt den Verlauf des Netzstroms in einer Phase bei einer Stromeinprägung nach einer ersten Ausführungsform der Erfindung,
- Fig. 3: zeigt den Verlauf des Netzstroms in einer Phase bei einer Stromeinprägung nach einer zweiten Ausführungsform der Erfindung,
- Fig. 4: eine Ansicht einer Regelungsstrecke des Reglers und
- Fig. 5: Gegenüberstellung der Oberwellen auf dem Netzeingangsstrom für drei unterschiedlich geprägte Eingangsströme.

Im Folgenden wird die Erfindung anhand der beiden gezeigten Ausführungsbeispiele mit Bezug auf die Figuren näher beschrieben, wobei gleiche Bezugszeichen in den Figuren auf gleiche strukturelle und/oder funktionale Merkmale hinweisen.

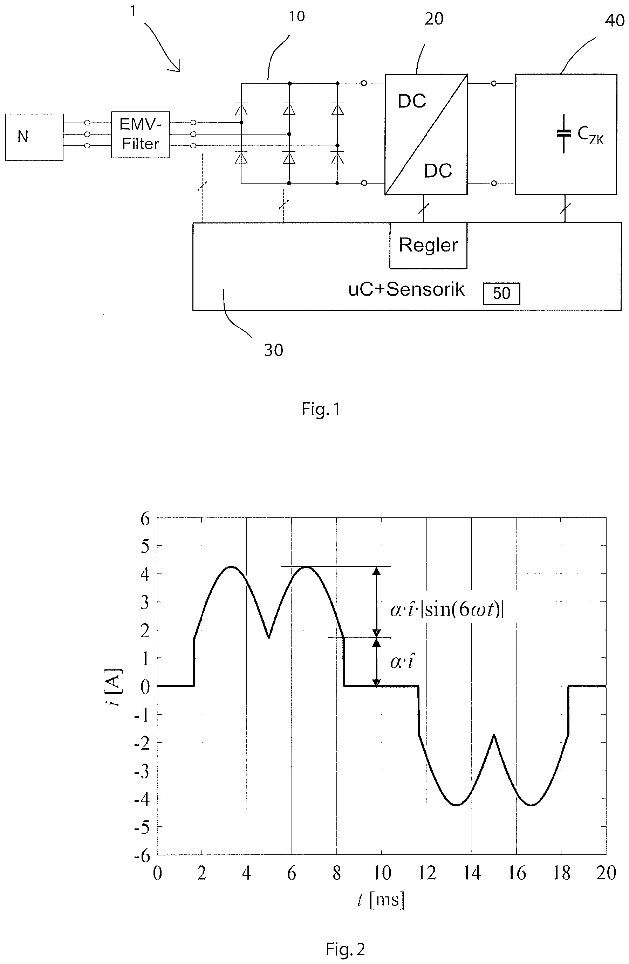

In der Figur 1 findet sich eine exemplarische Schaltungsanordnung 1, bei der mithilfe eines 3-Phasen- Gleichrichters 10 eine vom Netz kommende Eingangsspannung gleichgerichtet wird, zur Bereitstellung einer Gleichspannung für einen, den Speicherkondensator C_{ZK} aufweisenden Gleichspannungsverbraucher 40. Eingangsseitig befindet sich optional ein EMV-Filter. Die Schaltungsanordnung 1 ermöglicht die Reduktion der Oberwellen des Eingangsstroms des angeschlossenen Gleichrichters 10.

Dem Gleichrichter 10 ist ein Gleichspannungssteller 20, nämlich ein DC/DC-Wandler 20 nachgeschaltet. Ferner ist eine Regelungseinrichtung 30, umfassend einen Mikrokontroller µC und Sensoren 50. Die Regelungseinrichtung 30 (Regler) ist signal- und steuerungstechnisch (wie in der Fig. 1 dargestellt) mit dem DC/DC-Wandler 20 und dem Verbraucher 40 verbunden. Optional kann auch eine Verbindung zwischen der Regelungseinrichtung 30 und dem 3-Phasen- Gleichrichters 10 und auch einem Abgriff zur direkten Erfassung der Netzeingangsspannung bzw. des Eingangsstroms erfolgen.

Der vom DC/DC Wandler 20 eingeregelte Strom entspricht dabei je nach Netzspannung und Phasenlage den Strömen in den einzelnen Phasen.

Die Regelungseinrichtung 30 ist demnach so konfiguriert, dass dem Gleichspannungssteller 20 ein ganz spezifischer Strom aufgeprägt wird, so dass der Oberwellenanteil in dem Eingangsstrom gezielt reduziert wird.

Mittels des DC/DC-Wandlers 20 lässt sich die Spannungshöhe auf einen für den Verbraucher definierten Wert anpassen. Die Regelung sowohl des Verbrauchers 40, als auch des DC/DC-Wandlers erfolgt über den Mikrokontroller µC, wobei die entsprechenden Analogsignale durch eine vorgeschaltete Sensorik aufbereitet werden. Im Mikrokontroller µC läuft ein Regelalgorithmus, mit dem die gewünschten Sollwertsignale eingeregelt werden.

Aufgrund des im Verbrauchers 40 verbauten Zwischenkreiskondensators C_{ZK} ist es möglich, gezielt "kleine Energiemengen" in diesem zu speichern und auf diese Weise eine vom Netz nicht konstante, sondern angepasste Leistung aufzunehmen. Die Leistungsaufnahme richtet sich dabei nach dem aufzunehmdenden Strom und der Netzspannung. Durch gezielte Modifikation des Eingangsstroms des DC/DC-Wandlers 20, können somit die Harmonischen beeinflusst werden. Hierbei kann jede geeignete Stromform verwendet werden, die z. B. die folgenden Bedingungen erfüllt (Ausführungsbeispiel 1):
Der aufgeprägte Strom besitzt einem konstanten Anteil I Konstant und dazu addiert einen Betrag |sin|, der periodisch mit der 6-fachen Netzfrequenz, insbesondere gemäß der Funktion α·î·|sin(6ωt)| ist, wobei α·eine skalierbare Konstante und î·der Scheitelwert des Eingangsstroms ist.

Aufgrund des 3-Phasen- Gleichrichters 10 ergibt sich dabei der in der Figur 2 gezeigte Netzstrom in einer Phase. Der Sinus weist hierbei die 6-fache Netzfrequenz auf, wobei die Verteilung zwischen dem DC-Offset-Wert und dem |sin| über die Variable α erfolgen kann.

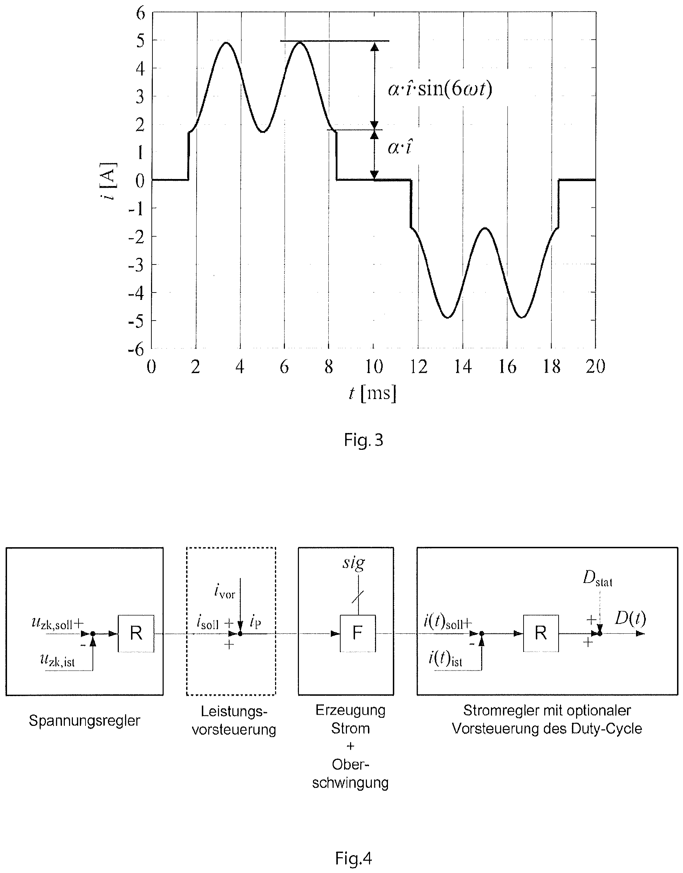

In einer zweiten alternativen Ausführungsform der Erfindung, deren Resultat in der Figur 3 ersichtlich ist, verwendet zur Aufprägung des Stroms ein Sinussignal mit einem Offset. Dies führt durch den Gleichrichter 10 zu dem in Figur 3 gezeigten Netzstrom. In dem Beispiel wurde als Sinussignal der Strom wie folgt definiert, α·î·sin (6ωt) addiert auf den gezeigten Offsetwert α·î.

In der Figur 4 ist die Regelung der Regelungseinrichtung 30 erläutert. Die Regelung des DC/DC-Wandlers 20, der hier als Tiefsetzsteller ausgebildet ist, ist wie folgt:
Die Spannung wird mit Hilfe eines Spannungsreglers R eingeregelt. Dieser kann dabei vorzugsweise als PI-Regler ausgeführt werden. Um Abweichungen in der Spannung weg zu regeln, gibt der Spannungsregler R einen Strom i_{Soll} vor. Diesem Sollstrom i_{Soll} kann optional ein zusätzlicher Strom iᵥₒᵣ, abhängig von der vom Verbraucher 40 aufgenommenen Leistung überlagert werden. In einer solchen Konfiguration kann eine höhere Regelungs-Dynamik des DC/DC- Wandlers 20 erreicht werden, was einer Leistungsvorsteuerung entspricht.

Der dadurch entstehende Strom ip wird im Anschluss daran mit Hilfe einer vorbestimmten mathematischen Funktion und zusätzlicher Signale in einen zeitlich veränderlichen Sollstrom i(t)ₛₒₗₗ umgewandelt. Der Strom i(t)ₛₒₗₗ entspricht dabei in seiner Form dem Strom mit überlagerten Oberwellen. Die dazu gewählte mathematische Funktion kann dabei beispielhaft u.a. in folgenden Funktionen ausgebildet sein:
- Addition des Signals Sig
- Addition abhängig des Eingangsstroms verstärkten Signals Sig
- Addition des Signals Sig in Abhängigkeit der Eingangsleistung oder
- einer beliebigen mathematischen Funktion der an und im DC-DC Wandler messbaren Ströme und Spannungen.

Das zu addierende Signal sig kann entweder eine einzelne Oberwelle der 5,10,15,... Netzharmonischen sein, alternativ ein aus der Netzspannung oder dem Zwischenkreis gemessenes und aufbereitetes Spannungssignal oder ein bzw. mehrere über eine PLL zur Netzspannung synchronisierte Oberwelle darstellen. Hieraus entsteht der gewünschte Stromverlauf mit zusätzlichem Stromsignal zur Reduktion der Oberwellen im Netz.

Zur Verbesserung der Dynamik kann der Stationäre Duty-Cycle Dₛₜₐₜ des DC-DC-Wandlers 20 nach dem Stromregler R aufgeschaltet werden. Der stationäre Duty-Cycle stellt dabei denjenigen Duty-Cycle dar, bei dem es in Abhängigkeit der Eingangs- und Ausgangsspannung zu keiner Veränderung des Stromflusses im DC/DC-Wandler 20 kommt.

In alternativen Ausführungsformen kann der DC/DC-Wandler als Parallelschaltung mehrerer DC/DC-Steller aufgebaut werden (Interleaving-Modus). Hierbei ist lediglich der Bereich des Stromreglers anzupassen, so dass jede der Stufen beim Interleaving einen eigenen Stromregler besitzt.

Die Verteilung der Ströme kann dabei linear auf die jeweils parallel geschalteten Stufen vorgenommen werden. Hierzu wird in der bereits vorhandene Regelstrecke eine Verteilung der Ströme über eine mathematische Funktion vorgenommen. In der einfachsten Ausführungsform erfolgt die Verteilung gleichmäßig auf alle Stromregler.

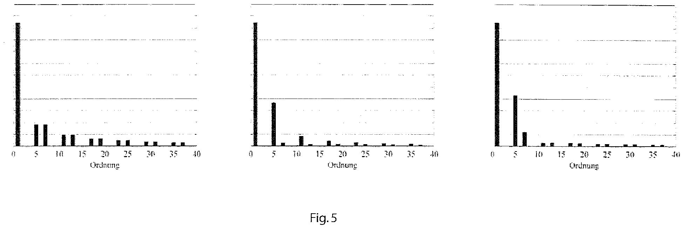

Die Figur 5 ist eine Gegenüberstellung der Oberwellen auf dem Netzeingangsstrom für drei unterschiedliche Situationen. Die jeweils entstehenden Oberwellen auf dem Netz sind im linken Bild die Stromoberwellen für einen Eingangsstrom mit konstanter Eingangsleistung, im mittleren Bild für die Ausführungsvariante 1 gemäß Fig. 2 und im rechten Bild für die alternative Ausführungsform der Variante nach Fig. 3. Es ist deutlich der gewünschte Effekt auf die Ausprägung der Harmonischen zu erkennen.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Schaltungsanordnung (1) zur Reduktion der Oberwellen des Eingangsstroms eines an einem Wechselstromnetz (N) angeschlossenen Gleichrichters (10) zur Bereitstellung einer Gleichspannung für einen, einen Speicherkondensator (C_{ZK}) aufweisenden Gleichspannungsverbraucher (40), umfassend einen dem Gleichrichter (10) nachgeschalteten Gleichspannungssteller (20) sowie eine Regelungseinrichtung (30), die konfiguriert ist, dem Gleichspannungssteller (20) einen spezifischen Strom aufzuprägen, insbesondere einen in der Form annäherndem DC-Strom ein Oberschwingungsstromsignal aufzuprägen, so dass der Oberwellenanteil in dem Eingangsstrom reduziert wird.

2. Schaltungsanordnung (1) nach Anspruch 1, **dadurch gekennzeichnet, dass** der Gleichspannungssteller (20) ein DC/DC-Wandler ist, vorzugsweise ein Hochsetzsteller, Tiefsetzsteller oder ein CuK-Wandler.

3. Schaltungsanordnung (1) nach Anspruch 1 oder 2, **dadurch gekennzeichnet, dass** der Gleichspannungssteller (20) aus einer Parallelschaltung und/oder Serienschaltung mehrerer DC/DC-Steller gebildet ist.

4. Schaltungsanordnung (1) nach einem der vorhergehenden Ansprüche, **dadurch gekennzeichnet, dass** das Aufprägen des Stromes mit einer nicht konstanten Amplitude leistungsabhängig erfolgt.

5. Schaltungsanordnung (1) nach einem der vorhergehenden Ansprüche 1 bis 3, **dadurch gekennzeichnet, dass** das Aufprägen des Stromes in Relation zu einem vorgegebenen Sollwert erfolgt.

6. Schaltungsanordnung (1) nach einem der vorhergehenden Ansprüche, **dadurch gekennzeichnet, dass** das Aufprägen des Stromes mit jeweils der 5-ten, 11-ten, 17-ten, ..., 5+n·6-ten Oberwelle der im Eingangssignal enthaltenen Oberwellen erfolgt.

7. Schaltungsanordnung (1) nach einem der vorhergehenden Ansprüche, **dadurch gekennzeichnet, dass** das Stromsignal zum Aufprägen des Stromes auf den Strom des Gleichspannungsstellers (20) aus dem netzseitigen Eingangssignal erzeugt wird.

8. Schaltungsanordnung (1) nach einem der vorhergehenden Ansprüche 1 bis 6, **dadurch gekennzeichnet, dass** der Speicherkondensator (C_{ZK}) ein Zwischenkreiskondensator ist und das Stromsignal zum Aufprägen des Stromes auf den DC-Strom des Gleichspannungsstellers (20) aus einem den Zwischenkreiskondensator enthaltenen Zwischenkreis erzeugt wird.

9. Schaltungsanordnung (1) nach einem der vorhergehenden Ansprüche 1 bis 8, **dadurch gekennzeichnet, dass** am Reglerausgang für den DC/DC-Wandler eine Vorsteuerung aufschaltbar ist oder aufgeschaltet wird, um den DC/DC-Wandler abhängig einer mathematischen Funktion f(t, U_{zk}, Uₑᵢₙ) vorzusteuern, mit den Variablen der Zeit t, der Zwischenkreisspannung U_{zk} und der Eingangsspannung Uₑᵢₙ.

10. Verfahren zur Reduktion der Oberwellen des Eingangsstroms eines an einem Wechselspannungsnetz angeschlossenen Gleichspannungsverbraucher (40) mittels einer Schaltungsanordnung (1) nach einem der vorhergehenden Ansprüche 1 bis 9, wobei der aufgeprägte Strom eine Stromform mit den folgenden kumulierten Anteilen aufweist:
a) einem konstanten Anteil I Konstant und dazu addiert einem Betrag |sin|, der periodisch mit der 6-fachen Netzfrequenz, insbesondere gemäß der Funktion α·î·|sin(6ωt)| ist
oder
b) einem periodischen Anteil α·î·sin(6ωt) addiert auf ein Offsetwert, vorzugsweise α·î,
wobei α·eine skalierbare Konstante und î·der Scheitelwert des Eingangsstroms.

11. Verfahren nach Anspruch 10, **dadurch gekennzeichnet, dass** die Erzeugung des Stromsignals aus der Netzspannung oder aus einer über eine PLL im Mikroprozessor (µC) der Regelungseinrichtung (30) synchronisierten Sinusschwingung oder aus einem gewonnenen Signal aus der Zwischenkreisspannung oder aus der Spannung an einem Abgriff nach dem Gleichrichter (10) erfolgt.
